Europäisches Patentamt

European Patent Office

Office européen des brevets

(19)

(11) **EP 0 754 936 A2**

(12) **EUROPÄISCHE PATENTANMELDUNG**

(43) Veröffentlichungstag:
   **22.01.1997 Patentblatt 1997/04**

(51) Int. Cl.$^6$: **G01L 1/26**

(21) Anmeldenummer: **96111056.6**

(22) Anmeldetag: **10.07.1996**

(84) Benannte Vertragsstaaten:
   **AT BE CH DE ES FR GB IT LI LU NL**

(30) Priorität: **21.07.1995 DE 19526653**

(71) Anmelder: **Diessner, Carmen**
   **71065 Sindelfingen (DE)**

(72) Erfinder: **Diessner, Carmen**
   **71065 Sindelfingen (DE)**

(74) Vertreter: **Vetter, Hans, Dipl.-Phys. Dr. et al**
   **Patentanwälte Dipl.-Ing. Rudolf Magenbauer**
   **Dipl.-Phys. Dr. Otto Reimold**
   **Dipl.-Phys. Dr. Hans Vetter,**
   **Dipl.-Ing. Martin Abel,**
   **Hölderlinweg 58**
   **73728 Esslingen (DE)**

(54) **Kraftmesseinrichtung**

(57)   Es wird eine Kraftmeßeinrichtung mit wenigstens einem Kraftsensor (16) und einem federbelastet an diesem direkt oder indirekt anliegenden Kraftaufnahmeelement (13) vorgeschlagen. Hierzu ist eine das Kraftaufnahmeelement (13) mit einem maximal zu messenden Kraftwert gegen den wenigstens einen Kraftsensor (16) pressende Federanordnung (17) vorgesehen. Die Richtung der auf das Kraftaufnahmeelement (13) wirkenden zu messenden Kraft ist gegen die Kraft der Federanordnung (17) gerichtet. Hierdurch wird bei Ausübung einer Kraft auf das Kraftaufnahmeelement (13) die Krafteinwirkung auf den Kraftsensor (16) insgesamt reduziert, so daß der Fall ausgeschlossen ist, daß auf Grund einer zu großen einwirkenden Kraft der Kraftsensor beschädigt oder zerstört werden könnte.

Fig. 1

EP 0 754 936 A2

## Beschreibung

Die Erfindung betrifft eine Kraftmeßeinrichtung mit wenigstens einem Kraftsensor und einem federbelastet an diesem direkt oder indirekt anliegenden Kraftaufnahmeelement.

Eine derartige, als Sensoraufnahmemechanik für eine berührungsempfindliche Platte ausgebildete Kraftmeßeinrichtung ist beispielsweise aus der DE-GM 94 04 488 bekannt. Bei der bekannten Einrichtung liegt eine Platte an den vier Eckpunkten eines Rahmens an vier Kraftsensoren an und wird an diesen elastisch federnd gehalten. Wird eine Kraft an einer bestimmten Stelle auf die Platte ausgeübt, so werden die vier Kraftsensoren je nach der Position der Krafteinwirkung unterschiedlich stark gedrückt, so daß vier Meßwerte erzeugt werden, aus denen die Position der Krafteinwirkung ermittelt werden kann. Eine derartige Einrichtung dient beispielsweise als berührungsempfindlicher Bildschirmvorsatz und wird auch als Touch Screen bezeichnet. Je größer die Krafteinwirkung, desto mehr werden die Kraftsensoren belastet. Dies hat den Nachteil, daß z.B. infolge eines Schlage auf die Platte die Krafteinwirkung so groß wird, daß ein Sensor oder mehrere Sensoren beschädigt oder zerstört werden. Dies trifft auch für andere Kraftmeßeinrichtungen zu, bei denen die Kraftsensoren entsprechend angeordnet sind.

Eine Aufgabe der vorliegenden Erfindung besteht nun darin, eine derartige Kraftmeßeinrichtung so zu verbessern, daß auch bei größeren Krafteinwirkungen, wie Schlägen, auf das jeweilige Kraftaufnahmeelement eine Beschädigung oder Zerstörung der Kraftsensoren wirksam verhindert wird.

Diese Aufgabe wird erfindungsgemäß dadurch gelöst, daß eine das Kraftaufnahmeelement mit einem maximal zu messenden Kraftwert gegen den wenigstens einen Kraftsensor pressende Federanordnung vorgesehen ist und daß die Richtung der auf das Kraftaufnahmeelement wirkenden zu messenden Kraft gegen die Kraft der Federanordnung gerichtet ist.

Bei der erfindungsgemäßen Kraftmeßeinrichtung wird somit der wenigstens eine Kraftsensor bei größer werdender einwirkender Kraft entlastet, also geschützt. Schläge und Stöße auf das Kraftaufnahmeelement wirken sich nicht negativ auf den Kraftsensor aus, sondern bewirken vielmehr eine völlige Kraftentlastung desselben. Durch eine relativ einfache und kostengünstige Anordnung wird daher ein sicherer Schutz gegen Beschädigungen des wenigstens einen Kraftsensors erreicht.

Durch die in den Unteransprüchen aufgeführten Maßnahmen sind vorteilhafte Weiterbildungen und Verbesserungen der im Anspruch 1 angegebenen Kraftmeßeinrichtung möglich.

In einer zweckmäßigen konstruktiven Ausgestaltung der Erfindung ist eine den Kraftsensor einerseits und die Federanordnung andererseits nach entgegengesetzten Richtungen abstützende Halteeinrichtung vorgesehen, die insbesondere im wesentlichen ein U-Profil oder ein Rechteck-Profil aufweist.

Je nach Anwendung kann das Kraftaufnahmeelement als Hebel- oder Plattenelement ausgebildet sein, das sowohl zwischen dem Kraftsensor und der Federanordnung als auch an wenigstens einem weiteren Haltepunkt gelagert ist, vorzugsweise gelenkig gelagert. Hierdurch ist es noch möglich, sich bei der Kraftmessung die Hebelwirkung des Kraftaufnahmeelements zunutze zu machen.

In einer bevorzugten Anwendung, wie sie auch im eingangs genannten Stand der Technik beschrieben ist, wird bei der erfindungsgemäßen Kraftmeßeinrichtung die Halteeinrichtung als Rechteckrahmen mit im wesentlichen U-förmigem Profil und das Kraftaufnahmeelement als in den Rahmen eingreifende Platte ausgebildet, wobei wenigstens in jedem Eckbereich ein Kraftsensor und ein Federelement angeordnet ist, und wobei die Federelemente die Federanordnung bilden. Hierdurch werden nicht nur die Kraftsensoren gegen größere Krafteinwirkungen und Schläge geschützt, sondern die Platte selbst, die bei dieser Anwendung vorzugsweise aus Glas oder einem anderen durchsichtigen Material besteht, wird ebenfalls geschützt, da sie durch Krafteinwirkung elastisch gegen die Federelemente gedrückt wird.

Zur Vereinfachung der Montage besteht das U-förmige Profil aus einem Winkelrahmenelement und einer Abstützplatte, die beispielsweise zur Bildung des U-förmigen Profils leicht miteinander verschraubt oder auf sonstige lösbare Weise befestigt werden.

Zur Bestimmung der Berührungskoordinaten auf dem plattenförmigen Kraftaufnahmeelement dient vorzugsweise ein diese aus den Kraftmeßwerten berechnender programmgesteuerter Rechner. Dieser weist insbesondere Mittel zum Eliminieren nichtlinearer Einflüsse auf die Berechnung der Berührungskoordinaten auf.

Als Kraftsensor eignen sich die meisten Kraft-/Spannungs-Wandler, insbesondere Dehnungsmeßstreifen, Piezoelemente od.dgl.

Die Federelemente können insbesondere Spiralfedern, Tellerfederanordnungen, Blattfedern oder Elastomer-Elemente sein.

Zwei Ausführungsbeispiele der Erfindung sind in der Zeichnung dargestellt und in der nachfolgenden Beschreibung näher erläutert. Es zeigen:

Fig. 1      eine Längsschnittdarstellung einer Kraftmeßeinrichtung als erstes Ausführungsbeispiel,

Fig. 2      eine Sensoraufnahmemechanik für eine berührungsempfindliche Platte zur Ermittlung der Position einer unter Krafteinwirkung vorgenommenen Berührung der Platte in einer Längsschnittdarstellung und

Fig. 3      das in Fig. 2 dargestellte Ausführungsbeispiel in einer Draufsicht.

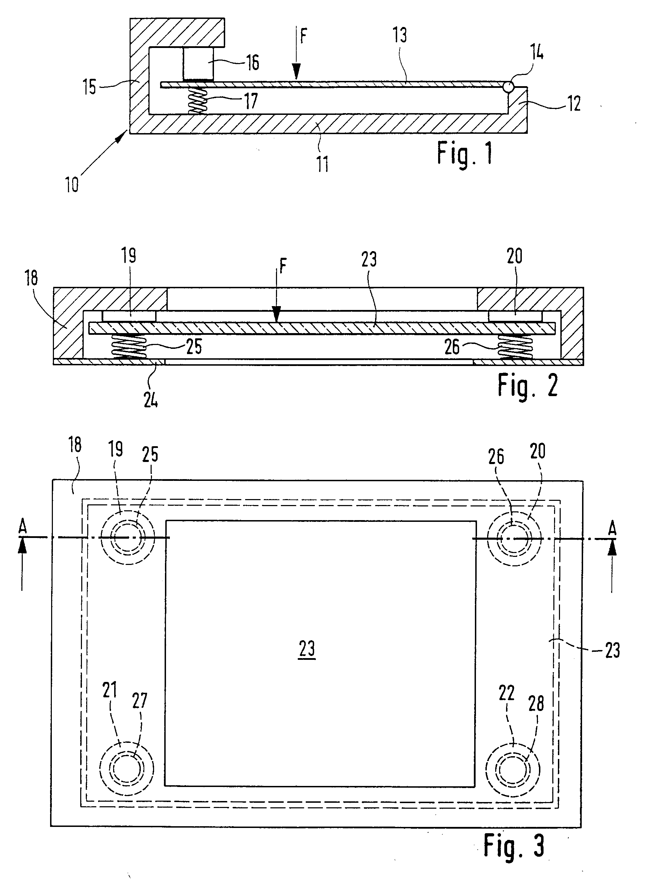

Bei der in Fig. 1 dargestellten Kraftmeßeinrichtung besteht eine Halteeinrichtung 10 aus einer Grundplatte 11, die an einer Seite eine hochstehende Gelenkhalterung 12 besitzt, an der ein Kraftaufnahmehebel 13 über ein Gelenk 14 schwenkbar gelagert ist. Anstelle eines Kraftaufnahmehebels 13 kann auch eine Kraftaufnahmeplatte treten. An der gegenüberliegenden Seite der Grundplatte 11 weist deren Randbereich ein U-förmiges Profil 15 auf, wobei der Kraftaufnahmehebel 13 zwischen die beiden U-Schenkel eingreift. Am oberen U-Schenkel des Profils 15 ist ein Kraftsensor 16 angebracht, gegen den der Kraftaufnahmehebel 13 mittels der Kraft einer Schraubenfeder 17 gepreßt wird, die sich am unteren U-Schenkel des Profils 15 bzw. an der Grundplatte 11 abstützt.

Als Kraftsensor 16 kann in an sich bekannter Weise ein Dehnungsmeßstreifen oder eine Anordnung von Dehnungsmeßstreifen oder ein Piezoelement eingesetzt werden. Anstelle einer Schraubenfeder 17 kann auch eine andere Federanordnung, z.B. eine Tellerfederanordnung, eine Blattfeder oder ein Elastomer-Element treten.

Im Ruhezustand wirkt auf den Kraftsensor 16 die Kraft der vorgespannten Schraubenfeder 17. Diese Kraft stellt gleichzeitig die maximal zu messende Kraft dar. Wird nun eine Kraft F von oben her auf den Kraftaufnahmehebel 13 ausgeübt, so wirkt diese Kraft gegen die Federkraft der Schraubenfeder 17, so daß bei größer werdender Kraft F der Kraftsensor 16 mehr und mehr entlastet wird. Es gilt die Beziehung:

$$F_{Sensor} = F_{Feder} - F$$

Bei dieser Gleichung wurde zur Vereinfachung davon ausgegangen, daß die Kraft F an der Stelle des Kraftsensors 16 bzw. der Schraubenfeder 17 wirkt. Im dargestellten Falle muß noch die Hebelwirkung des Kraftaufnahmehebels 13 in Abhängigkeit des jeweiligen Angriffspunkts der Kraft F berücksichtigt werden.

Zwischen dem Kraftaufnahmehebel 13 und dem Kraftsensor 16 kann noch ein die jeweilige Kraft übertragendes elastisches Element oder Federelement angeordnet sein, um ein vollständiges Abheben bzw. eine vollständige Kräfteentkopplung zwischen dem Kraftaufnahmehebel 13 und dem Kraftsensor 16 zu verhindern.

In den Fig. 2 und 3 ist ein Anwendungsbeispiel der in Fig. 1 prinzipiell dargestellten Kraftmeßeinrichtung dargestellt. Es handelt sich hierbei um einen berührungsempfindlichen Bildschirmvorsatz (Touch Screen), der dazu dient, vor Computer-Bildschirmen Bildschirmpositionen durch Berühren mit einem Finger oder einem Markierungsstift dem Computer mitzuteilen.

Dieser Bildschirmvorsatz besteht aus einem Rechteckrahmen 18 mit L-förmigem Profil, an dessen vier Eckbereichen jeweils ein Kraftsensor 19 bis 22 angebracht ist, der vom Betrachter her gesehen durch den oberen Schenkel des Rechteckrahmens 18 überdeckt ist. In diesen Rechteckrahmen 18 ist als Kraftaufnahmeelement eine Platte 23 aus Glas oder einem anderen durchsichtigen Material eingelegt, wobei die Einlegeöffnung durch die vertikalen Schenkel des Rechteckrahmens 18 begrenzt ist. Von hinten her (gemäß Fig. 2 von unten her) wird der Rechteckrahmen 18 durch eine Abstützplatte 24 abgeschlossen, an der vier Schraubenfedern 25 bis 28 so angeordnet sind, daß sie jeweils die Platte 23 an den Stellen der Kraftsensoren 19, 22 an diese anpressen. Die Abstützplatte 24 weist dabei einen rechteckigen Mittelausschnitt auf, um eine Durchsicht auf einen dahinter anzuordnenden Bildschirm zu ermöglichen.

Die Wirkungsweise entspricht wiederum prinzipiell dem in Fig. 1 dargestellten Ausführungsbeispiel, das heißt, durch die Schraubenfedern 25 bis 28 wird die Platte 23 mit maximaler Kraft gegen die Kraftsensoren 19 bis 22 angepreßt, so daß diese im Ruhezustand elektrische Meßsignale abgeben, die den maximal möglichen Kraftwerten entsprechen. Wird die Platte 23 an einer bestimmten Position unter Krafteinwirkung (Kraft F) berührt, so werden die Kraftsensoren 19 bis 22 in Abhängigkeit der Position der Berührungsstelle unterschiedlich stark entlastet, so daß unterschiedliche Meßsignale erzeugt werden. Die Ermittlung der Berührungskoordinaten erfolgt über Gleichungen, wie sie im eingangs angegebenen Stand der Technik beschrieben sind. Zur Auswertung der Meßwerte und zur entsprechenden Berechnung der Berührungskoordinaten dient ein nicht dargestellter programmgesteuerter Rechner. Dieser weist beispielsweise auch Mittel zum Eliminieren nichtlinearer Einflüsse auf die Berechnung der Berührungskoordinaten auf.

Die in den Fig. 2 und 3 dargestellte Anordnung kann auch zu anderen Zwecken dienen, beispielsweise kann sie als Tastatur oder als andere Eingabevorrichtung für Computer od.dgl. ausgebildet sein. In einem solchen Falle ist die Abstützplatte 24 als geschlossene durchgehende Platte ausgebildet und trägt entsprechende Bedienungssymbole, wobei bei einer Betätigung der darüberliegenden entsprechenden Position auf der Platte 23 eine entsprechende Funktion im Computer ausgelöst wird.

Weiterhin eignet sich diese Anordnung zur Eingabe von grafischen Darstellungen in einen Computer, wobei die grafische Darstellung mittels eines Schreibgriffels od.dgl. auf die Platte 23 aufgebracht wird.

Die in den Fig. 1 und 2 dargestellten Ausführungsbeispiele können selbstverständlich auch noch Abdichtungen aufweisen, wie sie im eingangs angegebenen Stand der Technik

**Patentansprüche**

1. Kraftmeßeinrichtung mit wenigstens einem Kraftsensor und einem federbelastet an diesem direkt oder indirekt anliegenden Kraftaufnahmeelement, dadurch gekennzeichnet, daß eine das Kraftaufnahmeelement (13; 23) mit einem maximal zu messenden Kraftwert gegen den wenigstens einen Kraftsensor (16; 19 - 22) pressende Federanordnung (17; 25 - 28) vorgesehen ist und daß die Richtung der auf das Kraftaufnahmeelement (13; 23) wirkenden zu messenden Kraft gegen die Kraft der Federanordnung (17; 25 - 28) gerichtet ist.

2. Kraftmeßeinrichtung nach Anspruch 1, dadurch gekennzeichnet, daß eine den Kraftsensor (16; 19 - 22) einerseits und die Federanordnung (17; 25 - 28) andererseits nach entgegengesetzten Richtungen abstützende Halteeinrichtung (15; 18, 24) vorgesehen ist.

3. Kraftmeßeinrichtung nach Anspruch 2, dadurch gekennzeichnet, daß die Halteeinrichtung (15; 18, 24) im wesentlichen ein U-Profil oder ein Rechteck-Profil aufweist.

4. Kraftmeßeinrichtung nach einem der vorhergehenden Ansprüche, dadurch gekennzeichnet, daß das Kraftaufnahmeelement (13; 23) als Hebel- oder Plattenelement ausgebildet ist, das sowohl zwischen dem Kraftsensor (16; 19) und der Federanordnung (17; 25) als auch an wenigstens einem weiteren Haltepunkt (14; 20 - 22, 26 - 28) gelagert ist.

5. Kraftmeßeinrichtung nach Anspruch 4, dadurch gekennzeichnet, daß das Kraftaufnahmeelement (13) an dem wenigstens einen weiteren Haltepunkt (14) gelenkig angeordnet ist.

6. Kraftmeßeinrichtung nach einem der Ansprüche 2 bis 4, dadurch gekennzeichnet, daß die Halteeinrichtung (18, 24) als Rechteckrahmen mit im wesentlichen U-förmigem Profil und das Kraftaufnahmeelement (23) als in den Rechteckrahmen eingreifende Platte ausgebildet ist, wobei wenigstens in jedem Eckbereich ein Kraftsensor (19 - 22) und ein Federelement (25 - 28) angeordnet ist, und wobei die Federelemente (25 - 28) die Federanordnung bilden.

7. Kraftmeßeinrichtung nach Anspruch 6, dadurch gekennzeichnet, daß das U-förmige Profil aus einem Winkelrahmenelement (18) und einer Abstützplatte (24) besteht.

8. Kraftmeßeinrichtung nach Anspruch 6 oder 7, gekennzeichnet durch eine die Berührungskoordinaten auf dem plattenförmigen Kraftaufnahmeelement (23) aus den Kraftmeßwerten berechnenden programmgesteuerten Rechner.

9. Kraftmeßeinrichtung nach Anspruch 8, dadurch gekennzeichnet, daß der Rechner Mittel zum Eliminieren nichtlinearer Einflüsse auf die Berechnung der Berührungskoordinaten aufweist.

10. Kraftmeßeinrichtung nach einem der vorhergehenden Ansprüche, dadurch gekennzeichnet, daß das plattenförmige Kraftaufnahmeelement (23) aus Glas oder einem anderen durchsichtigen Material besteht.

11. Kraftmeßeinrichtung nach einem der vorhergehenden Ansprüche, dadurch gekennzeichnet, daß als Kraftsensor (16; 19 - 22) ein Kraft-/Spannungs-Wandler vorgesehen ist, insbesondere eine Dehnungsmeßstreifenanordnung, ein Piezoelemente od.dgl.

12. Kraftmeßeinrichtung nach einem der vorhergehenden Ansprüche, dadurch gekennzeichnet, daß die Federanordnung (17; 25 - 28) als Schraubenfederanordnung, als Tellerfederanordnung, als Blattfederanordnung oder als Elastomer-Element-Anordnung ausgebilet ist.

13. Kraftmeßeinrichtung nach einem der Ansprüche 2 bis 12, dadurch gekennzeichnet, daß eine Abdichtung zwischen dem Kraftaufnahmeelement und der Halteeinrichtung vorgesehen ist.

Fig. 1

Fig. 2

Fig. 3